# EUROPÄISCHE PATENTANMELDUNG

(11) **EP 4 691 734 A1**
(43) Veröffentlichungstag der Anmeldung: **11.02.2026**
(21) Anmeldenummer: 25194169.6
(22) Anmeldetag: 05.08.2025
(51) Int. Cl.: B29C 49/42, B65G 54/02, B67C 7/00

(54) **VORRICHTUNG UND VERFAHREN ZUM TRANSPORTIEREN VON OBJEKTEN**

(30) Priorität: 09.08.2024 DE 102024122760
(71) Anmelder: KRONES AG, 93073 Neutraubling (DE)
(72) Erfinder: NEUBAUER, Michael, 93073 Neutraubling (DE); POESCHL, Stefan, 93073 Neutraubling (DE)
(74) Vertreter: v. Bezold & Partner Patentanwälte - PartG mbB

(57) **Zusammenfassung**

Die Erfindung betrifft u.a. eine Vorrichtung (10) zum Transportieren von Objekten (12). Eine Dichteinrichtung (16) dichtet zwischen einem ersten Raum (18) und einem zweiten Raum (20) ab und weist zum Abdichten einen Flüssigkeitskanal (22) zum Aufnehmen einer Abdichtflüssigkeit (A) auf. Eine Fördereinrichtung (30) weist mindestens eine Bewegungsvorrichtung (32) zum Transportieren eines Objekts (12) auf. Die mindestens eine Bewegungsvorrichtung (32) weist eine Objekthalterung (36), die in dem zweiten Raum (20) angeordnet ist, auf. Die mindestens eine Bewegungsvorrichtung (32) weist einen Anbindungsbereich (38) zum Führen, Antreiben und/oder Abstützen der jeweiligen Bewegungsvorrichtung (32) auf, der in dem ersten Raum (18) angeordnet ist. Die mindestens eine Bewegungsvorrichtung (32) weist eine Tragverbindung (46) auf, die den Anbindungsbereich (38) und die Objekthalterung (36) miteinander verbindet. Ein Abschnitt der Tragverbindung (46) erstreckt sich durch den Flüssigkeitskanal (22) zum Eintauchen in die Abdichtflüssigkeit (A).

## Beschreibung

### Technisches Gebiet

Die Erfindung betrifft eine Vorrichtung zum Transportieren von Objekten, vorzugsweise Behältern. Die Erfindung betrifft ferner eine Behälterbehandlungsanlage mit einer solchen Vorrichtung. Die Erfindung betrifft ferner ein Verfahren zum Transportieren von Objekten, vorzugsweise Behältern.

### Technischer Hintergrund

In einer Behälterbehandlungsanlage können Behälter behandelt und zwischen den einzelnen Anlagenteilen transportiert werden. Zum Transportieren der Behälter sind eine Vielzahl an Techniken bekannt.

Beispielsweise offenbart die EP 3 597 549 A1 eine Behälterbehandlungsmaschine umfassend ein Karussell mit Behälterbehandlungsstationen und einen Langstator-Linearmotor. Der Langstator-Linearmotor ist so angeordnet, dass an ihm laufende Mover in einem Teilbereich des Umfangs des Karussells mit auf dem Karussell beförderten oder beförderbaren Behältern mitlaufen können.

Der mangels Alternativen notwendige Einsatz von Laufrollen zum Führen und Abstützen der Mover/Shuttles bringt gewisse Nachteile mit sich. Beispielsweise verschleißen die Rollen im Betrieb. Es kommt zu einem Rollenabrieb. Es kann eine Schmierung der Rollen erforderlich sein, um die Lebensdauer zu erhöhen. Diese Nachteile sind bspw. besonders in Füllmaschinen und insbesondere in aseptischen Füllmaschinen äußerst unerwünscht, da sie hygienische Probleme mit sich bringen und eine Kontamination des Füllguts verursachen können.

Der Erfindung liegt die Aufgabe zu Grunde, eine verbesserte Technik zum Transportieren von Objekten, vorzugsweise Behältern, zu schaffen. Bevorzugt sollen zumindest einige der oben genannten Nachteile überwunden werden. Vorzugsweise soll die Technik eine verbesserte Hygiene, z. B. für aseptische Anwendungen, ermöglichen.

### Zusammenfassung der Erfindung

Die Aufgabe wird gelöst durch die Merkmale der unabhängigen Ansprüche. Vorteilhafte Weiterbildungen sind in den abhängigen Ansprüchen und der Beschreibung angegeben.

Ein Aspekt betrifft eine Vorrichtung zum Transportieren von Objekten, vorzugsweise Behältern. Die Vorrichtung weist eine (z. B. stationäre) Dichteinrichtung, vorzugsweise ein sog. Wasserschloss, auf. Die Dichteinrichtung dichtet zwischen einem ersten Raum und einem zweiten Raum ab und weist zum Abdichten einen, vorzugsweise umlaufenden, (z. B. stationären) Flüssigkeitskanal zum Aufnehmen einer Abdichtflüssigkeit (z. B. Abdichtflüssigkeitsbad) auf. Die Vorrichtung weist ferner eine Fördereinrichtung mit mindestens einer Bewegungsvorrichtung zum Transportieren eines Objekts auf. Die mindestens eine Bewegungsvorrichtung (z. B. Mover/Shuttle oder Mitnehmer) weist eine Objekthalterung zum Halten des Objekts auf, wobei die Objekthalterung in dem zweiten Raum angeordnet ist. Die mindestens eine Bewegungsvorrichtung weist ferner einen Anbindungsbereich zum Führen, Antreiben und/oder Abstützen der jeweiligen Bewegungsvorrichtung auf, der in dem ersten Raum angeordnet ist. Die mindestens eine Bewegungsvorrichtung weist ferner eine Tragverbindung auf, die den Anbindungsbereich und die Objekthalterung miteinander verbindet, wobei sich ein Abschnitt der Tragverbindung, durch den Flüssigkeitskanal zum Eintauchen in die Abdichtflüssigkeit erstreckt (z. B. angeschrägt, vorzugsweise quer, zu einem Längsverlauf des Flüssigkeitskanals).

Vorteilhaft ermöglicht die Vorrichtung einen Transport von Objekten, wie bspw. Behältern, ohne hygienische Risiken, z. B. in einer Getränkeabfüllanlage und/oder einer Aseptikanlage. Zum Transportieren können Bewegungsvorrichtungen eingesetzt werden, die im Prinzip beliebig angetrieben werden können, da deren Antrieb die Hygiene im zweiten Raum nicht beeinträchtigt. Gleichzeitig kann die Antriebstechnik usw. durch die Dichteinrichtung vor aggressiven Gasen und anderen Medien, die im zweiten Raum, bspw. zur Behandlung der Objekte, Anwendung finden, geschützt werden. Im Vergleich zu einer Lösung, bei der sich die Fördereinrichtung vollständig im zweiten Raum (z. B. Reinraum) befindet, muss der Teil der Fördereinrichtung im ersten Raum nicht fortwährend aufwendig gereinigt werden, um die hygienischen Bedingungen im zweiten Raum nicht zu beeinträchtigen. Es kann somit vorteilhaft eine weniger aufwendige und preiswertere Fördereinrichtung zum Einsatz kommen, die nicht speziell für hygienische Anwendungen konzipiert ist (z. B. keine speziellen Materialien und keine Kapselung notwendig). Vorteilhaft ermöglicht der Einsatz des Flüssigkeitskanals zudem, dass ein bevorzugter Überdruck im zweiten Raum aufrechterhalten werden kann, was bspw. bei Einsatz einer Spaltdichtung nur sehr schwer möglich wäre. Vorteilhaft muss der zweite Raum zum Warten und Reparieren der Fördereinrichtung auch nicht geöffnet werden, wodurch sich ein Kontaminationsrisiko bezüglich des zweiten Raums verringern lässt.

In einem Ausführungsbeispiel weist die Fördereinrichtung mehrere Bewegungsvorrichtungen auf, die vorzugsweise individuell (z. B. magnetisch oder elektromagnetisch) antreibbar und/oder unabhängig voneinander (z. B. entlang einer Führungsbahn) bewegbar sind (z. B. gesteuert von einer Steuereinrichtung oder einer Verarbeitungseinrichtung). Alternativ oder zusätzlich kann die Fördereinrichtung eine Langstator-Linearmotor-Fördereinrichtung, eine Kurzstator-Linearmotor-Fördereinrichtung oder eine Planarmotor-Fördereinrichtung sein. Vorteilhaft wird somit ermöglicht, dass die Bewegungsvorrichtungen beliebig individuell verfahren werden können unter permanenter Aufrechterhaltung der hygienischen Bedingungen innerhalb des zweiten Raums. Gleichzeitig wird der Langstator, Kurzstator oder Planarmotor, sowie ggf. Führungselemente, wie Laufrollen, inkl. Schmierung, vorteilhaft vor aggressiven Gasen und Medien, die im zweiten Raum zum Einsatz kommen können, geschützt.

Es ist möglich, dass der Anbindungsbereich mindestens einen (z. B. Permanent-) Magnet aufweist, über den die jeweilige Bewegungsvorrichtung antreibbar ist.

In einem weiteren Ausführungsbeispiel weist die Fördereinrichtung ein umlaufendes Förderelement, vorzugsweise Kette, Riemen oder Ringkörper, auf, wobei das umlaufende Förderelement mit der mindestens einen Bewegungsvorrichtung verbunden ist (z. B. dem Anbindungsbereich und/oder zum Mitnehmen der jeweiligen Bewegungsvorrichtung). Vorteilhaft ermöglicht die Vorrichtung somit auch, dass nicht nur neuartige Antriebstechniken, wie Langstator-Linearmotor, auf einfache Weise hygienisch mit dem zweiten Raum zum Transportieren der Objekte verbunden werden können, sondern auch herkömmliche Antriebstechniken, wie Ketten- oder Riemenantriebe.

In einer Ausführungsform weist die Fördereinrichtung eine, vorzugsweise umlaufende, Führungsbahn (z. B. Rollbahn, Gleitbahn oder Schiene), die in dem ersten Raum angeordnet ist, auf. Vorzugsweise weist der Anbindungsbereich der jeweiligen Bewegungsvorrichtungen mindestens ein Führungselement (z. B. Rolle oder Gleitschuh) auf, das an der Führungsbahn zum Führen der jeweiligen Bewegungsvorrichtung entlang der Führungsbahn geführt ist. Das mindestens eine Führungselement ist in dem ersten Raum angeordnet. Vorteilhaft kann damit bspw. ein Schmiermittel zum Schmieren der Führungsbahn und der Führungselemente im ersten Raum genutzt werden, ohne dass dadurch eine hygienische Beeinträchtigung im zweiten Raum auftritt.

In einer weiteren Ausführungsform ist mindestens eines erfüllt von:
- die Führungsbahn und der Flüssigkeitskanal erstrecken sich nebeneinander, vorzugsweise als im Wesentlichen Parallelkurven;
- der Flüssigkeitskanal ist außen oder innen von der Führungsbahn angeordnet; und
- das mindestens eine Führungselement trägt die jeweilige Bewegungsvorrichtung an der Führungsbahn.

In einer Ausführungsvariante ist mindestens eines erfüllt von:
- ein Querschnitt des Flüssigkeitskanals und ein Längsverlauf des Abschnitts der Tragverbindung sind zum Eintauchen des Abschnitts in die Abdichtflüssigkeit konstruktiv aneinander angepasst;
- der Flüssigkeitskanal weist einen im Wesentlichen U-förmigen oder einen im Wesentlichen V-förmigen Querschnitt auf;
- der Abschnitt der Tragverbindung weist einen im Wesentlichen U-förmigen oder einen im Wesentlichen V-förmigen Längsverlauf auf; und
- der Flüssigkeitskanal ist mit der Abdichtflüssigkeit, vorzugsweise aufweisend Wasser und/oder ein Sterilisationsmittel und/oder Desinfektionsmittel, gefüllt oder füllbar.

Vorteilhaft kann damit einerseits eine zuverlässige und wirksame Abdichtung zwischen dem ersten Raum und dem zweiten Raum erreicht werden. Andererseits kann damit vorteilhaft ein möglichst geringes Volumen des Flüssigkeitskanals ermöglicht werden.

In einem Ausführungsbeispiel ist der Flüssigkeitskanal nach oben offen, die Tragverbindung taucht im ersten Raum von oben in den Flüssigkeitskanal zum Eintauchen in die Abdichtflüssigkeit ein, und die Tragverbindung taucht im zweiten Raum von oben in den Flüssigkeitskanal zum Eintauchen in die Abdichtflüssigkeit ein. Vorteilhaft kann somit eine zuverlässige und wirksame Abdichtung zwischen dem ersten Raum und dem zweiten Raum erreicht werden.

In einem weiteren Ausführungsbeispiel weist die Dichteinrichtung eine Trennwand auf, die den ersten Raum und den zweiten Raum voneinander trennt und die, vorzugsweise von oben, in den Flüssigkeitskanal zum Eintauchen in die Abdichtflüssigkeit (z. B. im Wesentlichen mittig) eintaucht. Vorzugsweise ist ferner mindestens eines erfüllt von:
- die Trennwand ist stationär;
- die Trennwand ist umlaufend;
- ein in den Flüssigkeitskanal eintauchender Abschnitt der Trennwand und der Flüssigkeitskanal bilden gemeinsam einen Siphon;
- ein Längsverlauf der Trennwand erstreckt sich als Parallelkurve zu dem Flüssigkeitskanal; und
- mit der Trennwand ist ein, vorzugsweise umlaufender, Spritzschutz zum Vermindern eines Herausspritzens von Abdichtflüssigkeit aus dem Flüssigkeitskanal verbunden, vorzugsweise im zweiten Raum.

In einer Ausführungsform weist die Dichteinrichtung mindestens ein Dämpfungselement (z. B. Wellenbrecher) auf, das in dem Flüssigkeitskanal zum Dämpfen von durch die Bewegung der Tragverbindung in dem Flüssigkeitskanal bewirkten Wellen der Abdichtflüssigkeit ausgebildet ist. Vorzugsweise ist ferner mindestens eines erfüllt von:
- es sind mehrere Dämpfungselemente umfasst, die verteilt entlang eines Längsverlaufs des Flüssigkeitskanals angeordnet sind;
- das mindestens eine Dämpfungselement ist stabförmig, plattenförmig und/oder blockförmig;
- das mindestens eine Dämpfungselement ist in einem Kurvenabschnitt des Flüssigkeitskanals angeordnet; und
- das mindestens eine Dämpfungselement ist in einem Randbereich des Flüssigkeitskanals zum Freilassen eines Bewegungskorridors für den Abschnitt der Tragverbindung (z. B. im Wesentlichen mittig durch den Flüssigkeitskanal) angeordnet.

Vorteilhaft kann damit ein Überschwappen der Abdichtflüssigkeit verhindert und dennoch hohe Transportgeschwindigkeiten und Dynamiken beim Transportieren der Objekte ermöglicht werden.

In einer weiteren Ausführungsform ist mindestens eines erfüllt von:
- der Abschnitt der Tragverbindung weist eine strömungsoptimierte Form zum Geringhalten einer Wellenentstehung beim Bewegen durch die Abdichtflüssigkeit auf;
- der Abschnitt der Tragverbindung ist als ein gebogenes Blech, ein Bügel oder ein offenes Gestell ausgeführt;
- der Abschnitt der Tragverbindung ist abgeflacht; und
- eine in eine Vorwärtsbewegungsrichtung der jeweiligen Bewegungsvorrichtung gewandte Seite des Abschnitts der Tragverbindung ist abgerundet oder spitz zulaufend.

Vorteilhaft kann damit ein Überschwappen der Abdichtflüssigkeit verhindert und dennoch hohe Transportgeschwindigkeiten und Dynamiken beim Transportieren der Objekte ermöglicht werden. Vorteilhaft kann zudem ein Reibungswiderstand beim Bewegen durch die Abdichtflüssigkeit verringert werden, wodurch Energie zum Antreiben der mindestens einen Bewegungsvorrichtung eingespart werden kann.

In einer Ausführungsvariante weist die Vorrichtung ferner eine Verstelleinrichtung auf, die dazu ausgebildet ist, die Objekthalterung angewinkelt, vorzugsweise quer, zu einem Längsverlauf des Flüssigkeitskanals zu bewegen, vorzugsweise zu verschieben (z. B. in einer Horizontalrichtung) und/oder zu verschwenken. Vorteilhaft können die Objekte somit im zweiten Raum in mindestens einer weiteren Dimension bewegt werden, ohne dass sich die hygienischen Rahmenbedingungen verschlechtern. Vorteilhaft kann damit beispielsweise eine Zuführung zu einer Behandlungsstation, eine Objektübernahme und/oder eine Objektübergabe ermöglicht werden.

In einer weiteren Ausführungsvariante ist mindestens eines erfüllt von:
- die Verstelleinrichtung ist in der mindestens einen Bewegungsvorrichtung, vorzugsweise in der Tragverbindung, integriert, oder die Verstelleinrichtung ist zum Bewegen (z. B. Verschieben und/oder Schwenken) zumindest eines Abschnitts einer Führungsbahn der Fördereinrichtung, an der die mindestens eine Bewegungsvorrichtung geführt ist, und/oder eines (z. B. zu dem Abschnitt der Führungsbahn) zugehörigen Abschnitts (z. B. Langstatorsegments) des Langstators ausgebildet;
- die Verstelleinrichtung ist in dem ersten Raum und/oder dem Flüssigkeitskanal angeordnet;
- die Verstelleinrichtung ist eine Verschiebeeinrichtung und/oder eine Schwenkeinrichtung; und
- der Flüssigkeitskanal weist einen verbreiterten Kanalabschnitt zum Aufnehmen des Abschnitts der Tragverbindung innerhalb eines von der Verstelleinrichtung bewirkbaren Bewegungsraums für den Abschnitt der Tragverbindung auf.

Vorteilhaft kann damit eine gewünschte Verstellung der Objekte mittels der Verstelleinrichtung ermöglicht werden, ohne dass hierfür ein hygienischer Eingriff in dem zweiten Raum erforderlich ist.

In einem Ausführungsbeispiel ist ferner mindestens eines erfüllt von:
- der zweite Raum ist ein Prozessraum, in dem die Objekte behandelbar sind;
- der zweite Raum ist ein Reinraum, der vorzugsweise mit gefilterter Luft, Sterilluft und/oder einem Überdruck beaufschlagt oder beaufschlagbar ist;
- der erste Raum ist ein Antriebsraum, in dem, vorzugsweise geschmierte, Antriebstechnik zum Antreiben der mindestens einen Bewegungsvorrichtung angeordnet ist, und
- der erste Raum ist zur Umgebung hin offen.

In einem weiteren Ausführungsbeispiel ist ferner mindestens eines erfüllt von:
- die Objekthalterung ist eine Behälterhalterung zum Halten eines Behälters, vorzugsweise an einem Behälterhals, einem Behälterhalsring, einem Behältermantel und/oder einem Behälterboden des Behälters;
- die Objekthalterung weist ein Schiebeelement zum Schieben eines Objekts auf; und
- die Objekthalterung weist eine, vorzugsweise aktive oder passive, Klammer, vorzugsweise Behälterklammer, auf.

Ein weiterer Aspekt betrifft eine Behälterbehandlungsanlage aufweisend eine Vorrichtung wie hierin offenbart und eine Behälterbehandlungsvorrichtung zum Behandeln von Behältern, die zumindest abschnittsweise in dem zweiten Raum angeordnet ist. Die mindestens eine Bewegungsvorrichtung ist zum Transportieren eines als Behälter ausgeführten Objekts zu der Behälterbehandlungsvorrichtung, entlang der Behälterbehandlungsvorrichtung und/oder weg von der Behälterbehandlungsvorrichtung bewegbar (z. B. gesteuert von einer Steuereinrichtung oder einer Verarbeitungseinrichtung). Vorzugsweise ist die Behälterbehandlungsvorrichtung:
- eine Behälterherstellvorrichtung zum Herstellen der Behälter,
- eine Beschichtungsvorrichtung zum Beschichten der Behälter,
- eine Reinigungsvorrichtung (z. B. mit Rinsdüsen und/oder Tauchbad) zum Reinigen der Behälter,
- eine Sterilisierungsvorrichtung (z. B. mit Sterilisationsdüsen) zum Sterilisieren der Behälter,
- eine Füllvorrichtung (z. B. mit Füllventilen) zum Füllen der Behälter mit einem (z. B. flüssigen oder pastösen) Füllgut,
- eine Verschließvorrichtung (z. B. mit Verschließköpfen) zum Verschießen der Behälter,
- eine Etikettiervorrichtung (z. B. mit Etikettieraggregaten) zum Etikettieren der Behälter, oder
- eine Druckvorrichtung (z. B. mit Druckköpfen) zum Bedrucken der Behälter.

Beispielsweise können die Behälter als Flaschen, Dosen, Kanister, Kartons, Flakons, Tuben usw. ausgeführt sein.

Ein weiterer Aspekt betrifft ein Verfahren zum Transportieren von Objekten, vorzugsweise Behältern und/oder mittels einer Vorrichtung wie hierin offenbart (oder in einer Behälterbehandlungsanlage wie hierin offenbart). Das Verfahren weist auf:
- Abdichten zwischen einem ersten Raum und einem zweiten Raum mittels eines mit einer Abdichtflüssigkeit (z. B. Abdichtbad) gefüllten Flüssigkeitskanals einer Dichteinrichtung;
- Transportieren eines Objekts innerhalb des zweiten Raums mittels einer Objekthalterung einer Bewegungsvorrichtung einer Förderereinrichtung, wobei die Bewegungsvorrichtung mittels eines Anbindungsbereichs der Bewegungsvorrichtung geführt, angetrieben und/oder abgestützt ist, der in dem ersten Raum angeordnet ist, und die Bewegungsvorrichtung eine Tragverbindung, die die Objekthalterung und den Anbindungsbereich verbindet und einen Abschnitt aufweist, der in die Abdichtflüssigkeit eintaucht, aufweist; und optional
- Behandeln (z. B. Herstellen, Beschichten, Reinigen, Sterilisieren, Füllen, Verschließen, Etikettieren, Dekorieren und/oder Bedrucken) des transportierten Objekts in dem zweiten Raum, vorzugsweise mittels einer Behälterbehandlungsvorrichtung.

Vorteilhaft lassen sich mit dem Verfahren die gleichen Vorteile erzielen, die bereits unter Bezugnahme auf die Vorrichtung beschrieben wurden.

Es versteht sich, dass sämtliche hierin bezüglich der Vorrichtung und der Behälterbehandlungsanlage erwähnten Merkmale auch im Zusammenhang mit dem hierin offenbarten Verfahren offenbart und beanspruchbar sind und umgekehrt.

Die zuvor beschriebenen bevorzugten Ausführungsformen und Merkmale der Erfindung sind beliebig miteinander kombinierbar.

### Kurzbeschreibung der Figuren

Weitere Einzelheiten und Vorteile der Erfindung werden im Folgenden unter Bezug auf die beigefügten Zeichnungen beschrieben. Es zeigen:
- Figur 1: eine perspektivische Schnittansicht durch eine Vorrichtung zum Transportieren von Behältern gemäß einem Ausführungsbeispiel;
- Figur 2: eine Schnittansicht durch einen Bereich der beispielhaften Vorrichtung von Figur 1;
- Figur 3: eine perspektivische Ansicht einer Bewegungsvorrichtung gemäß einem Ausführungsbeispiel;
- Figur 4: eine perspektivische Ansicht einer Bewegungsvorrichtung gemäß einem weiteren Ausführungsbeispiel;
- Figur 5: eine perspektivische Ansicht einer Bewegungsvorrichtung gemäß einem weiteren Ausführungsbeispiel;
- Figur 6: eine perspektivische Ansicht eines Bereichs eines Flüssigkeitskanals einer Dichteinrichtung gemäß einem Ausführungsbeispiel;
- Figur 7: eine Schnittansicht durch einen Bereich einer Vorrichtung zum Transportieren von Behältern gemäß einem weiteren Ausführungsbeispiel; und
- Figur 8: eine Schnittansicht durch den Bereich einer beispielhaften Vorrichtung von Figur 7 mit einer verstellten Objekthalterung.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

### Detaillierte Beschreibung beispielhafter Ausführungsformen

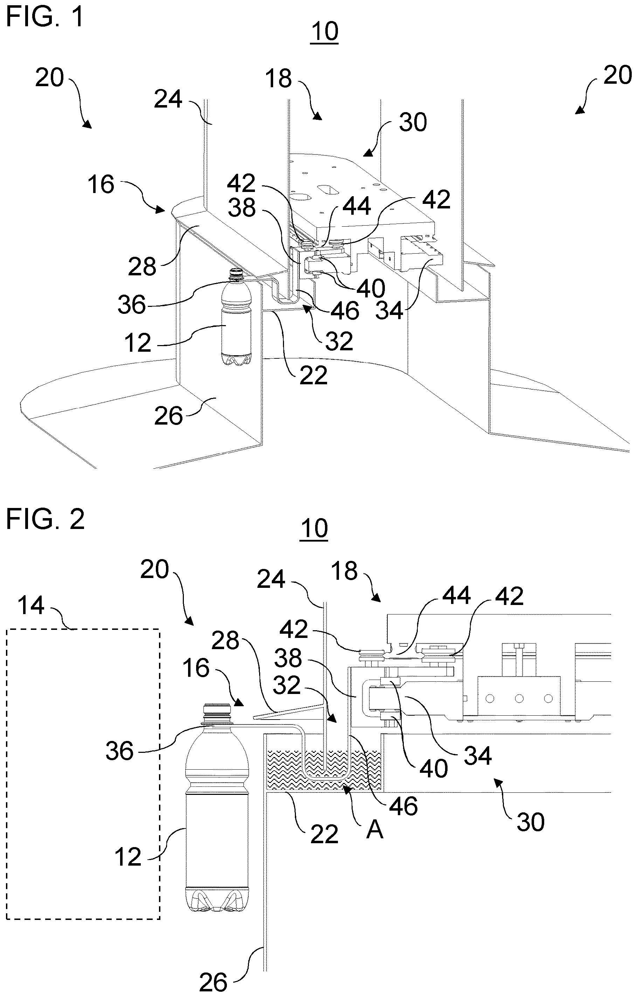

Die Figuren 1 und 2 zeigen eine Vorrichtung 10 zum Transportieren von Objekten 12. Bevorzugt sind die Objekte 12 Behälter. Die hierin offenbarten Techniken können jedoch auch zum Transportieren anderer Objekte angewendet werden.

Die Vorrichtung 10 kann bspw. in einer Behälterbehandlungsanlage, z. B. einer Getränkeabfüllanlage, umfasst sein. Beispielsweise kann die Vorrichtung 10 in der Behälterbehandlungsanlage zum Transportieren von Behältern angeordnet sein.

Beispielsweise kann die Vorrichtung 10 Behälter zu einer Behälterbehandlungsvorrichtung 14 transportieren und/oder weg von der Behälterbehandlungsvorrichtung 14 transportieren (nur schematisch in Figur 2 dargestellt). Die Behälterbehandlungsvorrichtung 14 kann die Behälter von der Vorrichtung 10 zum Behandeln übernehmen und/oder die Behälter nach dem Behandeln an die Vorrichtung 10 übergeben. Alternativ kann die Behälterbehandlungsvorrichtung 14 die Behälter behandeln, während diese von der Vorrichtung 10 gehalten sind. Es ist auch möglich, dass die Vorrichtung 10 und die Behälterbehandlungsvorrichtung 14 miteinander integriert sind. Die Vorrichtung 10 kann die Behälter beispielsweise durch oder entlang der Behälterbehandlungsvorrichtung 14 transportieren.

Bei der Behälterbehandlungsvorrichtung 14 kann es sich um jegliche Vorrichtung in einer Behälterbehandlungsanlage zum Behandeln von Behältern handeln. Beispielsweise kann es sich bei der Behälterbehandlungsvorrichtung 14 um eine Behälterherstellvorrichtung, eine Beschichtungsvorrichtung, eine Reinigungsvorrichtung, eine Sterilisierungsvorrichtung, eine Füllvorrichtung, eine Verschließvorrichtung, eine Etikettiervorrichtung oder eine Druckvorrichtung handeln.

Die Vorrichtung 10 weist eine Dichteinrichtung 16 und eine Fördereinrichtung 30 mit mindestens einer Bewegungsvorrichtung 32 auf. Vorzugsweise kann die Fördereinrichtung 30 noch eine Führungsbahn 44 aufweisen, an der die mindestens eine Bewegungsvorrichtung 32 geführt ist.

Die Dichteinrichtung 16 dichtet zwischen einem ersten Raum 18 und einem zweiten Raum 20 ab.

Der erste Raum 18 kann beispielsweise zur Umgebung hin offen sein oder zur Umgebung hin geschlossen sein. Beispielsweise kann der erste Raum 18 ein Antriebsraum sein. In dem Antriebsraum kann bspw. eine geschmierte Antriebstechnik der Fördereinrichtung 30 angeordnet sein.

Es ist möglich, dass der erste Raum 18 eine Ablufteinrichtung aufweist (nicht in den Figuren dargestellt). Die Ablufteinrichtung kann bspw. einen Lüfter oder ein Gebläse aufweisen, mit der Luft aus dem ersten Raum 18 abgeführt werden kann. Diese Luft aus dem ersten Raum 18 kann betriebsbedingt bspw. mit feinsten Schmiermitteltröpfchen oder Sterilisationsmitteltröpfchen oder verdunstetem Sterilisationsmittel verunreinigt sein.

Vorzugsweise kann der zweite Raum 20 ein Prozessraum und/oder Reinraum sein, in dem die Objekte 12 behandelt werden. Der Reinraum kann auch als Isolator bezeichnet werden. Der Reinraum kann im Wesentlichen frei bzw. arm an Partikeln (z. B. Teilchen aller Art und Größe) sein. Im Reinraum können sterile Reinraumbedingungen herrschen. Der Reinraum kann auch als ein Sterilraum oder Aseptikraum ausgeführt sein oder bezeichnet werden, da er vorzugsweise im Wesentlichen frei von Mikroorganismen ist.

Bevorzugt ist der Reinraum mit Sterilluft (Reinraumluft) beaufschlagbar. Bevorzugt ist der Reinraum derart mit Sterilluft beaufschlagbar, dass ein Luftdruck innerhalb des Reinraums größer als in einer Umgebung des Reinraums bzw. außerhalb des Reinraums ist, z. B. im ersten Raum 18. Der Reinraum kann bspw. Sterilluft von einer Sterilluftquelle empfangen. Die Sterilluftquelle kann bspw. mindestens einen Luftfilter und/oder eine Luftfördereinrichtung, z. B. Gebläse oder Verdichter, aufweisen. Bevorzugt kann der Reinraum eine Einlassschleuse für die Objekte 12 und/oder eine Auslassschleuse für die Objekte 12 aufweisen. Es ist möglich, dass die Fördereinrichtung 30 oder eine andere Fördereinrichtung zum Transportieren der Objekte 12 durch die Einlassschleuse und/oder die Auslassschleuse angeordnet ist. Es ist auch möglich, dass die Objekte 12 in der Einlassschleuse oder davor zum Sterilisieren mit einem Sterilisationsmedium, z. B. aufweisend Wasserstoffperoxid oder Peressigsäure, behandelt, z. B. besprüht oder benebelt, werden.

Besonders bevorzugt ist die Dichteinrichtung 16 als ein sogenanntes Wasserschloss ausgeführt, wie nachfolgend beispielhaft erläutert ist.

Die Dichteinrichtung 16 weist einen Flüssigkeitskanal 22 zum Abdichten zwischen dem ersten Raum 18 und dem zweiten Raum 20 auf. Bevorzugt kann die Dichteinrichtung 16 ferner mindestens eine Trennwand 24, 26 zum Abdichten zwischen dem ersten Raum 18 und dem zweiten Raum 20 aufweisen.

Der Flüssigkeitskanal 22 ist zum Aufnehmen einer Abdichtflüssigkeit A (nur in Figur 2 dargestellt) ausgebildet. Im Betrieb ist der Flüssigkeitskanal 22 mit der Abdichtflüssigkeit A gefüllt. Bevorzugt ist die Abdichtflüssigkeit A in Form eines Abdichtflüssigkeitsbads in dem Flüssigkeitskanal 22 aufgenommen. Die Abdichtflüssigkeit A kann bspw. Wasser oder Wasser gemischt mit einem Sterilisationsmedium und/oder einem Desinfektionsmedium oder eine andere (z. B. Sterilisations- bzw. Desinfektions-) Flüssigkeit sein.

Beispielsweise kann die Dichteinrichtung 16 eine Flüssigkeitsquelle und einen Füllstandsensor aufweisen (beide nicht in den Figuren dargestellt). Die Flüssigkeitsquelle kann die Abdichtflüssigkeit A bereitstellen. Der Füllstandsensor kann einen Füllstand der Abdichtflüssigkeit A in dem Flüssigkeitskanal erfassen. Abhängig von dem erfassten Füllstand kann Abdichtflüssigkeit von der Flüssigkeitsquelle zu dem Flüssigkeitskanal 22 zum Halten eines gewünschten Füllstands zugeführt werden, zum Beispiel gesteuert von einer Steuereinrichtung der Vorrichtung 10.

Bevorzugt weist der Flüssigkeitskanal 22 einen im Wesentlichen U-förmigen oder einen im Wesentlichen V-förmigen Querschnitt auf. Der Flüssigkeitskanal 22 kann nach oben offen sein.

Vorzugsweise ist der Flüssigkeitskanal 22 umlaufend. Ein Längsverlauf des Flüssigkeitskanals 22 kann beliebig an die jeweiligen Anforderungen angepasst sein. Beispielsweise kann der Flüssigkeitskanal 22 im Wesentlichen eine Kreisringform oder eine Ovalform (z. B. mit geraden Abschnitten) aufweisen.

Bevorzugt kann sich ein Längsverlauf des Flüssigkeitskanal 22 als eine, vorzugsweise geschlossene, Parallelkurve zu der Führungsbahn 44 bzw. zu einem Längsverlauf der Führungsbahn 44 erstrecken. Beispielsweise kann sich der umlaufende Flüssigkeitskanal 22 außen oder innen von der umlaufenden Führungsbahn 44 erstrecken.

Beispielsweise kann der Flüssigkeitskanal 22 als eine Flüssigkeitswanne mit zentraler Ausnehmung ausgeführt sein. Die Ausnehmung kann bspw. ringförmig, oval oder im Wesentlichen rechteckförmig (z. B. mit abgerundeten Ecken) sein. in der zentralen Ausnehmung kann bspw. der erste Raum 18 angeordnet sein.

Die mindestens eine Trennwand 24, 26 kann den ersten Raum 18 und den zweiten Raum 20 voneinander trennen. Die mindestens eine Trennwand 24, 26 ist vorzugsweise vertikal ausgerichtet bzw. ist eine Vertikaltrennwand. Die mindestens eine Trennwand 24, 26 kann bspw. eine Blechtrennwand sein und/oder Fenster(n) und/oder Tür(en) aufweisen. Die mindestens eine Trennwand 24, 26 ist bevorzugt stationär.

Bevorzugt kann die mindestens eine Trennwand 24, 26 eine umlaufende Trennwand sein. Beispielsweise kann sich ein Längsverlauf der mindestens einen Trennwand 24, 26 als Parallelkurve zu dem Flüssigkeitskanal 22 (bzw. einem Längsverlauf des Flüssigkeitskanals 22) und/oder der Führungsbahn 44 (bzw. einem Längsverlauf der Führungsbahn 44) erstrecken.

Vorzugsweise kann die Trennwand 24 direkt oberhalb von dem Flüssigkeitskanal 22 angeordnet sein. Die Trennwand 24 kann vorzugsweise im Wesentlichen mittig über dem Flüssigkeitskanal 22 angeordnet sein.

Bevorzugt ragt die Trennwand 24 von oben in den Flüssigkeitskanal 22, bzw. taucht in diesen ein, vorzugsweise ohne einen Grund / Boden des Flüssigkeitskanals 22 zu berühren. Die Trennwand 24 kann in die Abdichtflüssigkeit A in dem Flüssigkeitskanal 22 eintauchen. Beispielsweise kann so eine hermetische Trennung des ersten Raums 18 und des zweiten Raums 20 erreicht werden.

Vorzugsweise kann ein unterer, vorzugsweise umlaufender, Endabschnitt der Trennwand 24 innerhalb des Flüssigkeitskanals 22 angeordnet sein bzw. in die Abdichtflüssigkeit A eintauchen. Bevorzugt können der in den Flüssigkeitskanal 22 eintauchende Abschnitt der Trennwand 24 und der Flüssigkeitskanal 22 (mit der darin aufgenommenen Abdichtflüssigkeit A) gemeinsam einen Siphon bilden.

Die weitere Trennwand 26 kann seitlich neben und/oder unterhalb von dem Flüssigkeitskanal 22 angeordnet sein. Beispielsweise kann die Trennwand 24 sich ausgehend von dem Flüssigkeitskanal 22 bis hin zu einem Bodenbereich der Vorrichtung 10 erstrecken.

Es ist möglich, dass die Dichteinrichtung 26 bspw. noch einen Spritzschutz 28 aufweist. Bevorzugt kann der Spritzschutz 28 im zweiten Raum 20 und/oder oberhalb von dem Flüssigkeitskanal 22 angeordnet sein. Der Spritzschutz 28 kann dazu ausgebildet sein, ein Herausspritzen von Abdichtflüssigkeit A aus dem Flüssigkeitskanal 22 in den zweiten Raum 20 zu verhindern oder zumindest zu verringern. Der Spritzschutz 68 kann sich bspw. angeschrägt oder horizontal über einem Abschnitt des Flüssigkeitskanals 22 erstrecken.

Der Spritzschutz 28 kann bspw. als ein umlaufender Spritzschutz ausgeführt sein. Beispielsweise kann sich ein Längsverlauf des Spritzschutzes 28 als Parallelkurve zu dem Flüssigkeitskanal 22 erstrecken.

Der Spritzschutz 28 kann mit der Trennwand 24 verbunden sein. Bevorzugt kann sich der Spritzschutz 28 ausgehend von der Trennwand 24 über einem Abschnitt des Flüssigkeitskanals 22 erstrecken. Bspw. kann der Spritzschutz 28 an der Trennwand 24 getragen sein und/oder integral-einstückig mit der Trennwand 24 ausgebildet sein. Beispielsweise kann der Spritzschutz 28 als eine entlang der Trennwand 24 verlaufende Schürze ausgebildet sein.

Nachfolgend ist die Fördereinrichtung 30 beispielhaft unter Bezugnahme auf die Figuren 1 bis 3 beschrieben.

Wie bereits erwähnt, weist die Fördereinrichtung 30 die mindestens eine Bewegungsvorrichtung 32 auf. Mittels der mindestens einen Bewegungsvorrichtung 32 werden die Objekte 12 transportiert. Es ist möglich, dass eine Bewegungsvorrichtung 32 nur jeweils ein Objekt 12 transportiert. Es ist alternativ möglich, dass eine Bewegungsvorrichtung 32 jeweils mehrere Objekte 12 transportiert. Es ist alternativ möglich, dass jeweils mehrere Bewegungsvorrichtungen 32 gemeinsam ein Objekt 12 transportieren, z. B. zwischen sich.

Vorzugsweise sind mehrere Bewegungsvorrichtungen 32 umfasst (aus Gründen der besseren Übersicht nicht in den Figuren dargestellt). Besonders bevorzugt sind die mehreren Bewegungsvorrichtungen 32 individuell (z. B. magnetisch oder elektromagnetisch) antreibbar und optional unabhängig voneinander bewegbar, z. B. mittels eines Langstator-Linearmotors, eines Kurzstator-Linearmotors oder einer Planarmotors. Alternativ können auch auf den Bewegungsvorrichtungen 32 angeordnete Elektromotor(en) als Antrieb zum Einsatz kommen. Die Energieversorgung dieser Motoren geschieht vorzugsweise per Stromspeicher (Akku) der jeweiligen Bewegungsvorrichtung 32 oder drahtloser Energieübertagung oder mittels Energieübertagung per Schleifkontakt.

Bevorzugt kann die mindestens eine Bewegungsvorrichtung 32 mittels (z. B. elektro-) magnetischer Wechselwirkung mit einem Stator angetrieben sein.

Besonders bevorzugt ist die Fördereinrichtung 30 eine Langstator-Linearmotor-Fördereinrichtung, wie in den Figuren 1 und 2 dargestellt ist. Die mindestens eine Bewegungsvorrichtung 32 und der Stator können gemeinsam ein Langstator-Linearmotor-Antriebssystem bilden. Der Stator kann als ein ortsfester Langstator 34 mit Elektro- oder Permanentmagneten zum Bewirken einer Bewegung bzw. eines Antriebs der mit Permanentmagneten ausgestatteten mindestens einen Bewegungsvorrichtung 32 ausgebildet sein. Der Langstator 34 kann aus mehreren nebeneinander angeordneten Langstatorsegmenten gebildet sein.

Es ist allerdings bspw. auch möglich, dass die Fördereinrichtung 30 eine Kurzstator-Linearmotor-Fördereinrichtung oder ein Planarmotor-Fördereinrichtung ist (nicht in den Figuren dargestellt).

Beim Kurzstator-Linearmotor-Förderer können die mindestens eine Bewegungsvorrichtung 32 und ortsfeste Permanentmagnete gemeinsam ein Kurzstator-Linearmotor-Antriebssystem bilden. Die mindestens eine Bewegungsvorrichtung 32 kann einen durch Elektromagnete gebildeten Kurzstator aufweisen, der zum Antreiben der jeweiligen Bewegungsvorrichtung 32 in magnetische Wechselwirkung mit ortsfesten Permanentmagneten treten kann.

Die Planarmotor-Fördereinrichtung kann die mindestens eine Bewegungsvorrichtung 32 mit mindestens zwei Freiheitgraden (x-Richtung und y-Richtung) über eine bevorzugt planare Antriebsfläche eines Stators mittels magnetischer Wechselwirkung mit dem Stator bewegen. Die Bewegungsvorrichtung 32 und der Stator können gemeinsam ein Planarmotor-Antriebssystem bilden. Der Stator kann auch als Plattform oder Grundelement bezeichnet werden. Es ist auch möglich, dass zusätzlich eine Hubbewegung (z-Richtung) und/oder eine Neigebewegung der mindestens einen Bewegungsvorrichtung 32 relativ zu dem Stator / Grundelement mittels der magnetischen Wechselwirkung steuerbar ist. Das Grundelement kann bevorzugt in Kacheln segmentiert sein. Vorzugsweise kann die Antriebsfläche horizontal oder vertikal ausgerichtet sein. Der Stator kann bspw. durch bewegbare, z. B. drehbare, Permanentmagnete oder durch ortsfeste Elektromagnete gebildet sein. Die mindestens eine Bewegungsvorrichtung 32 weist vorzugsweise Permanentmagnete auf.

Es ist jedoch auch möglich, dass die mindestens eine Bewegungsvorrichtung 32 bspw. mittels eines umlaufenden Förderelements, z. B. Kette, Riemen oder Ringkörper, angetrieben ist. Beispielsweise kann die mindestens eine Bewegungsvorrichtung 32 dann als mindestens ein Objektmitnehmer mit dem umlaufenden Förderelement, vorzugsweise fest, verbunden sein (nicht in den Figuren dargestellt). Eine Antriebseinheit (z. B. ein Elektromotor) kann antreibend mit dem umlaufenden Förderelement verbunden sein. Im Falle mehrerer Bewegungsvorrichtungen 32 können diese dann entsprechend mittels des umlaufenden Förderelements nur gemeinsam bewegbar und antreibbar sein.

Die mindestens eine Bewegungsvorrichtung 32 weist (jeweils) eine Objekthalterung 36, einen Anbindungsbereich 38 und eine Tragverbindung 46 auf. Die mindestens eine Bewegungsvorrichtung 32 kann teilweise im ersten Raum 18 und teilweise im zweiten Raum 20 angeordnet sein.

Die Objekthalterung 36 ist im zweiten Raum 20 angeordnet. Die Objekthalterung 36 dient zum Halten (mindestens) eines zu transportierenden Objekts 12. Die Objekthalterung 36 kann das Objekt 12 / die Objekte 12 bspw. kraft- und/oder formschlüssig halten.

Vorzugsweise kann die Objekthalterung 36 eine Klammer (ein Greifer) oder eine starre Garnitur sein. Die Klammer kann bspw. eine aktive oder eine passive Klammer sein. Die Klammer kann das Objekt 12 bevorzugt tragen. Beispielsweise kann eine Objekthalterung 36 in einen Formschluss mit dem Objekt 12 gehen, um das Objekt 12 zu halten und vorzugsweise zu tragen.

Es ist auch möglich, dass die Objekthalterung 36 als ein Schiebelement zum Schieben (Mitnehmen) eines Objekts 12 ausgebildet ist. Beispielsweise kann die Objekthalterung 36 einen Körper mit einer (vertikal) einachsig konkav gekrümmten Aufnahmefläche für einen Rumpf oder einen Hals des Objekts 12 aufweisen. Das Objekt 12 kann von der Objekthalterung 36 z. B. über eine Überschubplatte oder ein Transportband geschoben werden, auf der das Objekt 12 während des Schiebens bodenseitig abgestützt ist.

Bevorzugt ist die Objekthalterung 36 eine Behälterhalterung, mit der ein Behälter gehalten und vorzugsweise getragen werden kann. Beispielsweise kann die Behälterhalterung den Behälter an dessen Behälterhalsring halten und tragen, wie in den Figuren 1 und 2 dargestellt ist. Alternativ oder zusätzlich kann die Behälterhalterung den Behälter an dessen Behältermantel und/oder Behälterboden halten und optional tragen. Beispielsweise kann die Objekthalterung 36 eine Behälterbodenstützplatte aufweisen, die einen Behälter bodenseitig abstützen kann.

Der Anbindungsbereich 38 ist im ersten Raum 18 angeordnet. Der Anbindungsbereich 38 dient dazu, die jeweilige Bewegungsvorrichtung 32 so anzubinden, dass die jeweilige Bewegungsvorrichtung 32 geführt, abgestützt und/oder angetrieben ist (d.h., mindestens eines von geführt, abgestützt und angetrieben).

Beispielsweise kann der Anbindungsbereich 38 mindestens einen (z. B. Permanent-) Magneten 40 aufweisen, über den die jeweilige Bewegungsvorrichtung 32 antreibbar ist, z. B. mittels des Langstators 34 (siehe Figuren 1 und 2). Alternativ kann der Anbindungsbereich 38, vorzugsweise lösbar, an dem umlaufenden Förderelement angebracht sein, mit dem die mindestens eine Bewegungsvorrichtung 32 somit angetrieben werden kann (nicht in den Figuren dargestellt).

Beispielsweise kann der Anbindungsbereich 38 mindestens ein Führungselement 42 aufweisen. Das mindestens eine Führungselement 42 kann an der Führungsbahn 44 der Fördereinrichtung 30 geführt sein. Das mindestens eine Führungselement 42 kann bspw. als Rolle oder Gleitschuh ausgeführt sein. Vorzugsweise kann das mindestens eine Führungselement 42 die jeweilige Bewegungsvorrichtung 32 auch an der Führungsbahn 44 abstützen. Bevorzugt kann das mindestens eine Führungselement 42 in dem ersten Raum 18 angeordnet sein.

Vorzugsweise kann die Führungsbahn 44 eine umlaufende Führungsbahn sein. Die Führungsbahn 44 kann bspw. eine Rollbahn, eine Gleitbahn oder eine Schiene sein. Bevorzugt kann die Führungsbahn 44 in dem ersten Raum 18 angeordnet sein.

Die Tragverbindung 46 verbindet die Objekthalterung 36 und den Anbindungsbereich 38 miteinander, vorzugsweise direkt. Bevorzugt kann die Objekthalterung 36 über die Tragverbindung 46 an dem Anbindungsbereich 38 getragen sein.

Die Tragverbindung 46 kann teilweise im ersten Raum 18 und teilweise im zweiten Raum 20 angeordnet sein. Beispielsweise kann die Tragverbindung 46 im ersten Raum 18 von oben in den Flüssigkeitskanal 22 zum Eintauchen in die Abdichtflüssigkeit A eintauchen. Beispielsweise kann die Tragverbindung 46 im zweiten Raum 20 von oben in den Flüssigkeitskanal 22 zum Eintauchen in die Abdichtflüssigkeit A eintauchen. Vorzugsweise ist die Tragverbindung 46 beabstandet zum Boden und den Seitenwänden des Flüssigkeitskanals 22 und optional beabstandet zur Trennwand 24 angeordnet.

Ein Abschnitt der Tragverbindung 46 erstreckt sich durch den Flüssigkeitskanal 22 zum Eintauchen in der Abdichtflüssigkeit A. Bevorzugt kann sich ein Längsverlauf des Abschnitts angeschrägt, vorzugsweise quer, zu einem Längsverlauf des Flüssigkeitskanals 22 durch den Flüssigkeitskanal 22 erstrecken.

Der Abschnitt kann bspw. ein mittiger Abschnitt der Tragverbindung 46 sein. Der Abschnitt der Tragverbindung 46 kann bspw. zwischen der Objekthalterung 36 und dem Anbindungsbereich 38 angeordnet sein.

Vorzugsweise können ein Querschnitt des Flüssigkeitskanals 22 und ein Längsverlauf des Abschnitts der Tragverbindung 46 zum Eintauchen des Abschnitts in die Abdichtflüssigkeit konstruktiv aneinander angepasst sein. Beispielsweise kann der Abschnitt der Tragverbindung 46 einen im Wesentlichen U-förmigen oder einen im Wesentlichen V-förmigen Längsverlauf aufweisen.

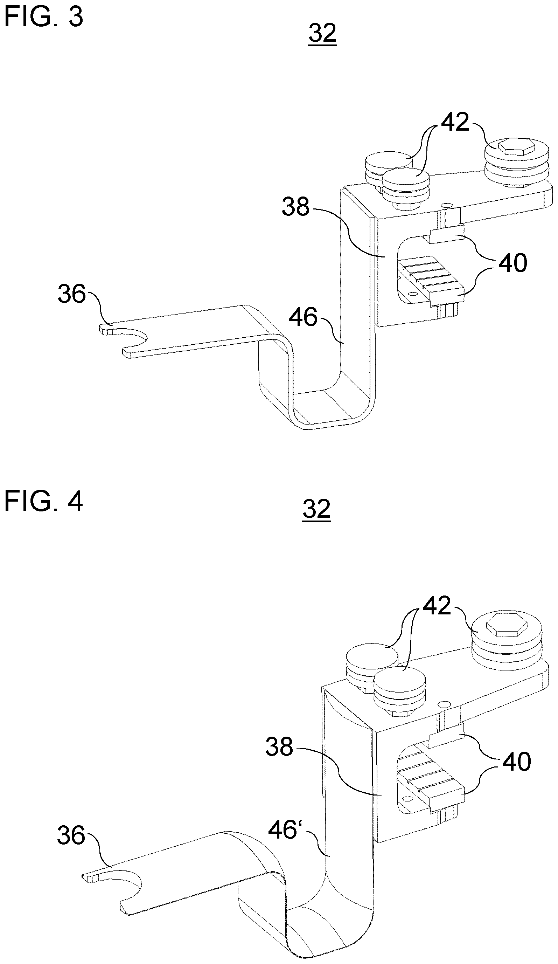

Die Figuren 3 bis 5 zeigen, dass der in den Flüssigkeitskanal 22 eintauchende Abschnitt der Tragverbindung 46 (46', 46") bevorzugt eine strömungsoptimierte Form aufweist. Die strömungsoptimierte Form führt vorzugsweise dazu, dass der eintauchende Abschnitt möglichst wenig Widerstand bei der Bewegung durch die Abdichtflüssigkeit A erfährt. Vorzugsweise ist die strömungsoptimierte Form so gestaltet, dass die Abdichtflüssigkeit A sowohl bei Gerad- als auch bei Kurvenfahrt möglichst wenig schwappt.

Die Figur 3 zeigt beispielhaft, dass der in den Flüssigkeitskanal 22 eintauchende Abschnitt der Tragverbindung 46 als ein abgeflachtes, gebogenes Blech gebildet ist.

Die Figur 4 zeigt beispielhaft, dass der in den Flüssigkeitskanal 22 eintauchende Abschnitt der Tragverbindung 46 (46', 46") abgerundet oder spitz zulaufend ist. Die Abrundung oder spitz zulaufende Form kann an einer Seite des Abschnitts angeordnet sein, der in eine Vorwärtsbewegungsrichtung der jeweiligen Bewegungsvorrichtung 32 gewandt ist. Optional kann auch auf einer dazu entgegengesetzten Seite des Abschnitts eine Abrundung oder spitz zulaufende Form umfasst sein.

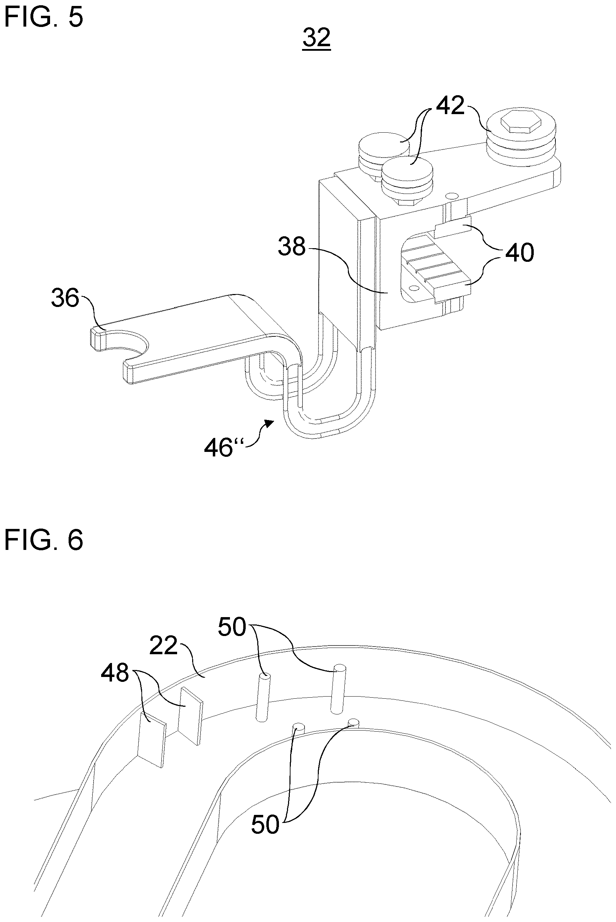

Die Figur 5 zeigt beispielhaft, dass der in den Flüssigkeitskanal 22 eintauchende Abschnitt der Tragverbindung 46 als ein offenes Gestell bzw. Bügel aus mehreren Stabelementen ausgeführt sein kann.

Die Figur 6 zeigt eine Technik zum Verhindern eines Überschwappens der Abdichtflüssigkeit A aus dem Flüssigkeitskanal 22.

Der in Figur 6 dargestellte Bereich der Dichteinrichtung 16 ist ein Bereich des Flüssigkeitskanals 22. Die Dichteinrichtung 16 kann mindestens ein Dämpfungselement 48, 50 zum Dämpfen einer Wellenbewegung aufweisen. Die Wellenbewegung kann durch die Bewegung der Tragverbindung 46 in der Abdichtflüssigkeit A in dem Flüssigkeitskanal 22 bewirkt sein. Das mindestens eine Dämpfungselement 48, 50 kann als ein Wellenbrecher wirken.

Das mindestens eine Dämpfungselement 48, 50 kann in dem Flüssigkeitskanal 22 angeordnet sein. Das mindestens eine Dämpfungselement 48, 50 kann oben, mittig und/oder unten im Flüssigkeitskanal 22 angeordnet sein. Bevorzugt ist das mindestens eine Dämpfungselement 48, 50 in die Abdichtflüssigkeit A eingetaucht. Bevorzugt sind mehrere Dämpfungselemente 48, 50 umfasst, die verteilt entlang eines Verlaufs des Flüssigkeitskanals 22 angeordnet sind.

Bevorzugt kann das mindestens eine Dämpfungselement 48, 50 in einem Kurvenabschnitt des Flüssigkeitskanals 22 angeordnet sein, wie in Figur 6 beispielhaft dargestellt ist.

Vorzugsweise kann das mindestens eine Dämpfungselement 48, 50 in einem Randbereich des Flüssigkeitskanals angeordnet sein. Beispielsweise kann das mindestens eine Dämpfungselement 48, 50 direkt benachbart zu oder direkt verbunden mit einer Seitenwand des Flüssigkeitskanals 22 angeordnet sein. Vorzugsweise kann so ein Bewegungskorridor für den eingetauchten Abschnitt der Tragverbindung 46 im Wesentlichen mittig durch den Flüssigkeitskanal 22 freigehalten werden.

Das mindestens eine Dämpfungselement 48, 50 kann bspw. plattenförmig (siehe Bezugszeichen 48), z. B. in Form eines Blechs, oder stabförmig (siehe Bezugszeichen 50) sein. Andere Gestaltungen zum Dämpfen einer Wellenbewegung sind ebenfalls möglich, z. B. blockförmig.

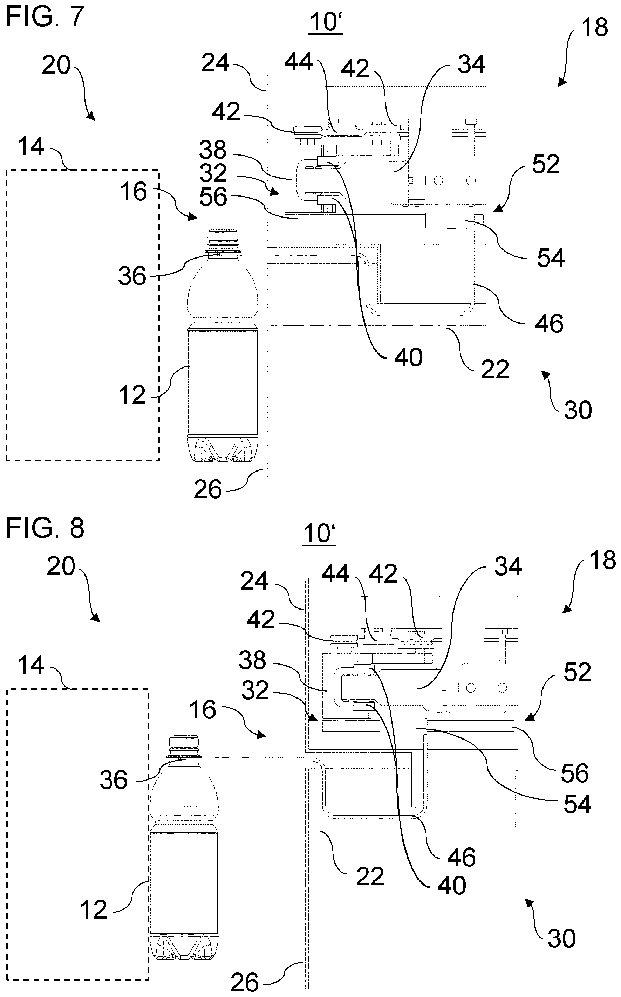

Die Figuren 7 und 8 zeigen eine modifizierte Vorrichtung 10', bei der zusätzlich zu einer Bewegbarkeit der mindestens einen Bewegungsvorrichtung 32 bzw. des Objekts 12 in einer Transportrichtung der Fördereinrichtung 30 mindestens ein zusätzlicher Freiheitsgrad zum Bewegen des Objekts 12 vorhanden ist.

Im Einzelnen kann die Fördereinrichtung 30 eine Verstelleinrichtung 52 aufweisen.

Mittels der Verstelleinrichtung 52 kann die Objekthalterung 36 und damit das daran gehaltene Objekt 12 angewinkelt, vorzugsweise quer, zu einem Längsverlauf des Flüssigkeitskanals 22 bzw. einer Transportrichtung der Fördereinrichtung 30 bewegt werden.

Vorzugsweise ermöglicht die Verstelleinrichtung 52 ein, vorzugsweise horizontales, Verschieben der Objekthalterung 36. Entsprechend kann die Verstelleinrichtung 52 eine Verschiebeeinrichtung sein.

Alternativ oder zusätzlich kann die Verstelleinrichtung 52 ein Schwenken der Objekthalterung 36 ermöglichen, vorzugsweise um eine Schwenkachse parallel oder senkrecht zu einem Längsverlauf des Flüssigkeitskanals 22 und/oder der Transportrichtung der Fördereinrichtung 30. Entsprechend kann die Verstelleinrichtung 52 eine Schwenkeinrichtung sein. Die Schwenkeinrichtung kann bspw. mindestens ein Drehgelenk aufweisen.

Wie in den Figuren 7 und 8 beispielhaft dargestellt ist, ist die Verstelleinrichtung 52 bevorzugt in der bzw. jeder Bewegungsvorrichtung 32 integriert. Beispielsweise kann die Verstelleinrichtung 52 jeweils in der Tragverbindung 46 integriert sein. Alternativ kann die Verstelleinrichtung 52 bspw. jeweils in dem Anbindungsbereich 38 oder der Objekthalterung 36 integriert sein. Die Verstelleinrichtung 52 kann sich entsprechend mit der jeweiligen Bewegungsvorrichtung 32 mitbewegen.

Beispielhaft zeigen die Figuren 7 und 8 die Verstelleinrichtung 52 in einer eingefahrenen Stellung (Figur 7) und in einer ausgefahrenen Stellung (Figur 8).

Die Verstelleinrichtung 52 kann bspw. einen verschiebbaren Schlitten 54 aufweisen, der in der Tragverbindung 46 integriert ist. Der Schlitten 54 kann entlang einer Schlittenführung 56 verschoben werden. Beim Verschieben des Schlittens 54 entlang der Schlittenführung 56 wird bspw. auch der eingetauchte Abschnitt der Tragverbindung 46 sowie die Objekthalterung 36 mit dem gehaltenen Objekt 12 verschoben.

Alternativ besteht bspw. die Möglichkeit, dass die Verstelleinrichtung 52 extern von der mindestens einen Bewegungsvorrichtung 32 angeordnet ist. Beispielsweise könnte die Verstelleinrichtung 52 zum Bewegen zumindest eines Abschnitts der Führungsbahn 44 und optional zumindest eines Abschnitts des Langstators 34 angeordnet sein. Sofern eine Bewegungsvorrichtung 32 an diesem bewegbaren Abschnitt der Führungsbahn 44 positioniert ist, kann diese dann zusammen mit der jeweiligen Objekthalterung 36 und dem jeweils gehaltenen Objekts 12 von der Verstelleinrichtung 52 angewinkelt zu einem Verlauf der Führungsbahn 44 bewegt werden.

Die Verstelleinrichtung 52 kann auf jegliche denkbare Art betätigt werden. Beispielsweise kann ein elektrischer, elektromagnetischer, pneumatischer, hydraulischer oder mechanischer Aktor umfasst sein, der die mittels der Verstelleinrichtung 52 bewirkte Bewegung betätigt.

Beispielsweise kann der Aktor stationär sein, sodass vorzugsweise eine Bewegung der Verstelleinrichtung 52 nur an einem Ort erfolgt, z. B. bei der Behälterbehandlungsvorrichtung 14, vorzugsweise einer Füllstation der Behälterbehandlungsvorrichtung 14 zum Füllen eines Behälters. Alternativ kann die mindestens eine Bewegungsvorrichtung 32 bspw. eine Steuerrolle (Kurvenrolle) aufweisen, die an einer stationären Steuerkurve zum Erzeugen der Bewegung der Verstelleinrichtung 52 abrollt.

Bevorzugt kann die Verstelleinrichtung 52 in dem ersten Raum 18 angeordnet sein. Alternativ oder zusätzlich kann die Verstelleinrichtung 52 bspw. in dem Flüssigkeitskanal 22, z. B. eingetaucht in die Abdichtflüssigkeit A, angeordnet sein. Bei der Anordnung im Flüssigkeitskanal 22 kann die Verstelleinrichtung 52 beispielsweise auf einer oder auf beiden Seiten der Trennwand 24 angeordnet sein.

Vorzugsweise kann der Flüssigkeitskanal 22 einen verbreiterten Abschnitt aufweisen. Der verbreiterte Abschnitt kann bspw. gegenüber einem vorhergehenden Abschnitt und/oder einem anschließenden Abschnitt des Flüssigkeitskanals 22 verbreitert sein. Der verbreiterte Abschnitt kann derart verbreitert sein, dass der eintauchende Abschnitt der Tragverbindung 46 innerhalb eines von der Verstelleinrichtung 52 bewirkbaren Bewegungsraums für den eintauchenden Abschnitt aufgenommen werden kann.

Bevorzugt ist der verbreiterte Abschnitt des Flüssigkeitskanals 22 benachbart zu einer Behälterbehandlungsvorrichtung 14 angeordnet. Beispielsweise kann ein von der Objekthalterung 36 gehaltener Behälter zu einer Behandlungsstation (z. B. Füllstation oder Verschließstation) der Behälterbehandlungsvorrichtung 14 durch die von der Verstelleinrichtung 52 bewirkbare (z. B. Ausfahr-) Bewegung zugeführt werden.

Beispielsweise kann der Flüssigkeitskanal 22 einen Transportabschnitt und einen Verstellabschnitt (=verbreiterter Abschnitt) aufweisen. Der Transportabschnitt kann schmaler sein als der Verstellabschnitt / verbreiterte Abschnitt. Im Transportabschnitt können die Objekte 12 entlang eines Längsverlaufs des Flüssigkeitskanals 22 mittels der mindestens einen Bewegungsvorrichtung 32 bewegt werden. Im Verstellabschnitt (=verbreiterter Abschnitt) kann eine Bewegung des jeweiligen Objekts 12 mittels der Verstelleinrichtung 52 ermöglicht werden.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Insbesondere beansprucht die Erfindung auch Schutz für den Gegenstand und die Merkmale der Unteransprüche unabhängig von den in Bezug genommenen Ansprüchen. Insbesondere sind die einzelnen Merkmale des unabhängigen Anspruchs 1 jeweils unabhängig voneinander offenbart. Zusätzlich sind auch die Merkmale der Unteransprüche unabhängig von sämtlichen Merkmalen des unabhängigen Anspruchs 1 und beispielsweise unabhängig von den Merkmalen bezüglich des Vorhandenseins und/oder der Konfiguration der Dichteinrichtung, der Fördereinrichtung, der Objekthalterung, des Anbindungsbereichs und/oder der Tragverbindung des unabhängigen Anspruchs 1 offenbart. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Vorrichtung zum Transportieren von Objekten
- 12: Objekt (zum Beispiel Behälter)
- 14: Behälterbehandlungsvorrichtung
- 16: Dichteinrichtung
- 18: erster Raum
- 20: zweiter Raum
- 22: Flüssigkeitskanal
- 24: Trennwand
- 26: weitere Trennwand
- 28: Spritzschutz
- 30: Fördereinrichtung
- 32: Bewegungsvorrichtung
- 34: Langstator / Langstator-Linearmotor
- 36: Objekthalterung
- 38: Anbindungsbereich
- 40: Magnet
- 42: Führungselement
- 44: Führungsbahn
- 46: Tragverbindung
- 48: Dämpfungselement
- 50: Dämpfungselement
- 52: Verstelleinrichtung
- 54: Schlitten
- 56: Schlittenführung

- A: Abdichtflüssigkeit

## Patentansprüche

1. Vorrichtung (10) zum Transportieren von Objekten (12), vorzugsweise Behältern, wobei die Vorrichtung (10) aufweist:
eine Dichteinrichtung (16), vorzugsweise Wasserschloss, wobei die Dichteinrichtung (16) zwischen einem ersten Raum (18) und einem zweiten Raum (20) abdichtet und zum Abdichten einen, vorzugsweise umlaufenden, Flüssigkeitskanal (22) zum Aufnehmen einer Abdichtflüssigkeit (A) aufweist;
eine Fördereinrichtung (30) mit mindestens einer Bewegungsvorrichtung (32) zum Transportieren eines Objekts (12), wobei die mindestens eine Bewegungsvorrichtung (32) aufweist:
- eine Objekthalterung (36) zum Halten des Objekts (12), wobei die Objekthalterung (36) in dem zweiten Raum (20) angeordnet ist;
- einen Anbindungsbereich (38) zum Führen, Antreiben und/oder Abstützen der jeweiligen Bewegungsvorrichtung (32), der in dem ersten Raum (18) angeordnet ist; und
- eine Tragverbindung (46), die den Anbindungsbereich (38) und die Objekthalterung (36) miteinander verbindet, wobei sich ein Abschnitt der Tragverbindung (46), durch den Flüssigkeitskanal (22) zum Eintauchen in die Abdichtflüssigkeit (A) erstreckt.

2. Vorrichtung (10) nach Anspruch 1, wobei mindestens eines erfüllt ist von:
die Fördereinrichtung (30) weist mehrere Bewegungsvorrichtungen (32) auf, die vorzugsweise individuell antreibbar und unabhängig voneinander bewegbar sind; und
die Fördereinrichtung (30) ist eine Langstator-Linearmotor-Fördereinrichtung, eine Kurzstator-Linearmotor-Fördereinrichtung, eine Planarmotor-Fördereinrichtung oder eine Fördereinrichtung mit einem umlaufenden Förderelement, vorzugsweise Kette, Riemen oder Ringkörper, wobei das umlaufende Förderelement mit der mindestens einen Bewegungsvorrichtung (32) verbunden ist.

3. Vorrichtung (10) nach Anspruch 1 oder Anspruch 2, wobei:
die Fördereinrichtung (30) eine, vorzugsweise umlaufende, Führungsbahn (44), die in dem ersten Raum (18) angeordnet ist, aufweist; und
der Anbindungsbereich (38) der jeweiligen Bewegungsvorrichtungen (32) mindestens ein Führungselement (42) aufweist, das an der Führungsbahn (44) zum Führen der jeweiligen Bewegungsvorrichtung (32) entlang der Führungsbahn (44) geführt ist, wobei das mindestens eine Führungselement (42) in dem ersten Raum (18) angeordnet ist.

4. Vorrichtung (10) nach Anspruch 3, wobei mindestens eines erfüllt ist von:
die Führungsbahn (44) und der Flüssigkeitskanal (22) erstrecken sich nebeneinander, vorzugsweise als im Wesentlichen Parallelkurven;
der Flüssigkeitskanal (22) ist außen oder innen von der Führungsbahn (44) angeordnet; und
das mindestens eine Führungselement (42) trägt die jeweilige Bewegungsvorrichtung (32) an der Führungsbahn (44).

5. Vorrichtung (10) nach einem der vorherigen Ansprüche, wobei mindestens eines erfüllt ist von:
ein Querschnitt des Flüssigkeitskanals (22) und ein Längsverlauf des Abschnitts der Tragverbindung (46) sind zum Eintauchen des Abschnitts in die Abdichtflüssigkeit (A) konstruktiv aneinander angepasst;
der Flüssigkeitskanal (22) weist einen im Wesentlichen U-förmigen oder einen im Wesentlichen V-förmigen Querschnitt auf;
der Abschnitt der Tragverbindung (46) weist einen im Wesentlichen U-förmigen oder einen im Wesentlichen V-förmigen Längsverlauf auf; und
der Flüssigkeitskanal (22) ist mit der Abdichtflüssigkeit (A), vorzugsweise aufweisend Wasser und/oder ein Sterilisationsmittel und/oder ein Desinfektionsmittel, gefüllt oder füllbar.

6. Vorrichtung (10) nach einem der vorherigen Ansprüche, wobei:
der Flüssigkeitskanal (22) nach oben offen ist;
die Tragverbindung (46) im ersten Raum (18) von oben in den Flüssigkeitskanal (22) zum Eintauchen in die Abdichtflüssigkeit (A) eintaucht; und
die Tragverbindung (46) im zweiten Raum (20) von oben in den Flüssigkeitskanal (22) zum Eintauchen in die Abdichtflüssigkeit (A) eintaucht.

7. Vorrichtung (10) nach einem der vorherigen Ansprüche, wobei:
die Dichteinrichtung (16) eine Trennwand (24) aufweist, die den ersten Raum (18) und den zweiten Raum (20) voneinander trennt und die, vorzugsweise von oben, in den Flüssigkeitskanal (22) zum Eintauchen in die Abdichtflüssigkeit (A) eintaucht,
wobei vorzugsweise mindestens eines erfüllt ist von:
die Trennwand (24) ist stationär;
die Trennwand (24) ist umlaufend;
ein in den Flüssigkeitskanal (22) eintauchender Abschnitt der Trennwand (24) und der Flüssigkeitskanal (22) bilden gemeinsam einen Siphon;
ein Längsverlauf der Trennwand (24) erstreckt sich als Parallelkurve zu dem Flüssigkeitskanal (22); und
mit der Trennwand (24) ist ein, vorzugsweise umlaufender, Spritzschutz (28) zum Vermindern eines Herausspritzens von Abdichtflüssigkeit (A) aus dem Flüssigkeitskanal (22) verbunden, vorzugsweise im zweiten Raum (18).

8. Vorrichtung (10) nach einem der vorherigen Ansprüche, wobei:
die Dichteinrichtung (16) mindestens ein Dämpfungselement (48, 50) aufweist, das in dem Flüssigkeitskanal (22) zum Dämpfen von durch die Bewegung der Tragverbindung (46) in dem Flüssigkeitskanal (22) bewirkten Wellen der Abdichtflüssigkeit (A) ausgebildet ist,
wobei vorzugsweise mindestens eines erfüllt ist von:
es sind mehrere Dämpfungselemente (48, 50) umfasst, die verteilt entlang eines Längsverlaufs des Flüssigkeitskanals (22) angeordnet sind;
das mindestens eine Dämpfungselement (48, 50) ist stabförmig, plattenförmig oder blockförmig;
das mindestens eine Dämpfungselement (48, 50) ist in einem Kurvenabschnitt des Flüssigkeitskanals (22) angeordnet; und
das mindestens eine Dämpfungselement (48, 50) ist in einem Randbereich des Flüssigkeitskanals (22) zum Freilassen eines Bewegungskorridors für den Abschnitt der Tragverbindung (46) angeordnet.

9. Vorrichtung (10) nach einem der vorherigen Ansprüche, wobei mindestens eines erfüllt ist von:
der Abschnitt der Tragverbindung (46) weist eine strömungsoptimierte Form zum Geringhalten einer Wellenentstehung beim Bewegen durch die Abdichtflüssigkeit (A) auf;
der Abschnitt der Tragverbindung (46) ist als ein gebogenes Blech, ein Bügel oder ein offenes Gestell ausgeführt;
der Abschnitt der Tragverbindung (46) ist abgeflacht; und
eine in eine Vorwärtsbewegungsrichtung der jeweiligen Bewegungsvorrichtung (32) gewandte Seite des Abschnitts der Tragverbindung (46) ist abgerundet oder spitz zulaufend.

10. Vorrichtung (10) nach einem der vorherigen Ansprüche, ferner aufweisend:
eine Verstelleinrichtung (52), die dazu ausgebildet ist, die Objekthalterung (12) angewinkelt, vorzugsweise quer, zu einem Längsverlauf des Flüssigkeitskanals (22) zu bewegen, vorzugsweise zu verschieben und/oder zu verschwenken.

11. Vorrichtung (10) nach Anspruch 10, wobei mindestens eines erfüllt ist von:
die Verstelleinrichtung (52) ist in der mindestens einen Bewegungsvorrichtung (32), vorzugsweise in der Tragverbindung (46), integriert, oder die Verstelleinrichtung (52) ist zum Bewegen zumindest eines Abschnitts einer Führungsbahn (44) der Fördereinrichtung (30), an der die mindestens eine Bewegungsvorrichtung (32) geführt ist, ausgebildet;
die Verstelleinrichtung (52) ist in dem ersten Raum (18) und/oder dem Flüssigkeitskanal (22) angeordnet;
die Verstelleinrichtung (52) ist eine Verschiebeeinrichtung und/oder eine Schwenkeinrichtung; und
der Flüssigkeitskanal (22) weist einen verbreiterten Kanalabschnitt zum Aufnehmen des Abschnitts der Tragverbindung (46) innerhalb eines von der Verstelleinrichtung (52) bewirkbaren Bewegungsraums für den Abschnitt der Tragverbindung (46) auf.

12. Vorrichtung (10) nach einem der vorherigen Ansprüche, wobei mindestens eines erfüllt ist von:
der zweite Raum (20) ist ein Prozessraum, in dem die Objekte (12) behandelbar sind;
der zweite Raum (20) ist ein Reinraum, der vorzugsweise mit gefilterter Luft, Sterilluft und/oder einem Überdruck beaufschlagt oder beaufschlagbar ist;
der erste Raum (18) ist ein Antriebsraum, in dem, vorzugsweise geschmierte, Antriebstechnik zum Antreiben der mindestens einen Bewegungsvorrichtung (32) angeordnet ist, und
der erste Raum (18) ist zur Umgebung hin offen.

13. Vorrichtung (10) nach einem der vorherigen Ansprüche, wobei mindestens eines erfüllt ist von:
die Objekthalterung (36) ist eine Behälterhalterung zum Halten eines Behälters, vorzugsweise an einem Behälterhals, einem Behälterhalsring, einem Behältermantel und/oder einem Behälterboden des Behälters;
die Objekthalterung (36) weist ein Schiebeelement zum Schieben eines Objekts (12) auf; und
die Objekthalterung (36) weist eine, vorzugsweise aktive oder passive, Klammer, vorzugsweise Behälterklammer, auf.

14. Behälterbehandlungsanlage aufweisend:
eine Vorrichtung (10) nach einem der vorherigen Ansprüche; und
eine Behälterbehandlungsvorrichtung (14) zum Behandeln von Behältern, die zumindest abschnittsweise in dem zweiten Raum (20) angeordnet ist,
wobei:
die mindestens eine Bewegungsvorrichtung (32) zum Transportieren eines als Behälter ausgeführten Objekts (12) zu der Behälterbehandlungsvorrichtung (14), entlang der Behälterbehandlungsvorrichtung (14) und/oder weg von der Behälterbehandlungsvorrichtung (14) bewegbar ist,
wobei vorzugsweise:
die Behälterbehandlungsvorrichtung (14):
- eine Behälterherstellvorrichtung zum Herstellen der Behälter ist,
- eine Beschichtungsvorrichtung zum Beschichten der Behälter ist,
- eine Reinigungsvorrichtung zum Reinigen der Behälter ist,
- eine Sterilisierungsvorrichtung zum Sterilisieren der Behälter ist,
- eine Füllvorrichtung zum Füllen der Behälter mit einem Füllgut ist,
- eine Verschließvorrichtung zum Verschießen der Behälter ist,
- eine Etikettiervorrichtung zum Etikettieren der Behälter ist, oder
- eine Druckvorrichtung zum Bedrucken der Behälter ist.

15. Verfahren zum Transportieren von Objekten (12), vorzugsweise Behältern und/oder mittels einer Vorrichtung (10) nach einem der Ansprüche 1 bis 13, wobei das Verfahren aufweist:
Abdichten zwischen einem ersten Raum (18) und einem zweiten Raum (20) mittels eines mit einer Abdichtflüssigkeit (A) gefüllten Flüssigkeitskanals (22) einer Dichteinrichtung (16);
Transportieren eines Objekts (12) innerhalb des zweiten Raums (20) mittels einer Objekthalterung (36) einer Bewegungsvorrichtung (32) einer Förderereinrichtung (30), wobei:
- die Bewegungsvorrichtung (32) mittels eines Anbindungsbereichs (38) der Bewegungsvorrichtung (32) geführt, angetrieben und/oder abgestützt ist, der in dem ersten Raum (18) angeordnet ist;
- die Bewegungsvorrichtung (32) eine Tragverbindung (46), die die Objekthalterung (36) und den Anbindungsbereich (38) verbindet und einen Abschnitt aufweist, der in die Abdichtflüssigkeit (A) eintaucht, aufweist,
und optional:
Behandeln des transportierten Objekts (12) in dem zweiten Raum (20), vorzugsweise mittels einer Behälterbehandlungsvorrichtung (14).
